# EUROPÄISCHE PATENTSCHRIFT

(11) **EP 0 344 490 B1**
(45) Veröffentlichungstag und Bekanntmachung des Hinweises auf die Patenterteilung: **25.01.1995**
(21) Anmeldenummer: 89108445.1
(22) Anmeldetag: 10.05.1989
(51) Int. Cl.: B61B 10/00, G06K 19/04, G07C 3/00

(54) **Transportmittel**
Transport means
Moyens de transport

(30) Priorität: 03.06.1988 DE 8807283 U
(43) Veröffentlichungstag der Anmeldung: 06.12.1989
(73) Patentinhaber: RSL LOGISTIK GMBH & CO, D-86899 Landsberg (DE)
(72) Erfinder: Gonser, Jochen, Dipl.-Ing. (FH), D-7014 Kornwestheim (DE)
(74) Vertreter: Grünecker, Kinkeldey, Stockmair & Schwanhäusser Anwaltssozietät

(56) Entgegenhaltungen:
- EP-A- 0 103 730
- EP-A- 0 203 290
- EP-A- 0 220 380
- DE-A- 3 242 551
- DE-A- 3 313 481
- DE-C- 1 506 858
- DE-U- 8 535 331
- US-A- 4 597 495

## Beschreibung

Die Erfindung bezieht sich auf ein Transportmittel der im Oberbegriff von Anspruch 1 erläuterten Art.

Ein derartiges Transportmittel ist aus dem DE-GM 85 35 331 bekannt. Bei dem bekannten Transportmittel wird als Codeträger ein computerlesbares Schild (Barcode) oder eine Anzahl Nocken oder dgl. verwendet. Die Codeträger sind jedoch nur auf einer Seitenfläche des Transportmittels unterzubringen, da sie nur dort les-bzw. abtastbar sind. Die Transportmittel müssen somit immer in der gleichen Lage auf der Schiene geführt und das Lese- bzw. Abtastgerät immer auf der gleichen Seite der Förderschiene angeordnet sein. Darüber hinaus sind die bekannten Codeträger störanfällig und können sehr leicht, beispielsweise beim Anschlagen eines Transportmittels oder beim Abnehmen und Lagern, beschädigt werden. Durch diese Nachteile ist der Anwendungsbereich des bekannten Transportmittels beschränkt. Außerdem müssen die Codeträger, wenn eine Umkodierung des Transportmittels erwünscht ist, austauschbar am Transportmittel befestigt werden und sind dadurch nur schwer gegen ein unbeabsichtigtes Vertauschen zu sichern.

Der Erfindung liegt die Aufgabe zugrunde, ein Transportmittel mit einem Codeträger zu schaffen, dessen Ablesung besser an die betrieblichen Gegebenheiten angepaßt werden kann und der gegen Beschädigung bzw. Austausch geschützt ist.

Die Aufgabe wird durch die kennzeichnenden Merkmale des Anspruchs 1 gelöst.

Durch die Verwendung einer berührungslos ansteuerbaren, elektronischen Schaltung als Codeträger kann das Lesegerät entsprechend den betrieblichen und räumlichen Platzverhältnissen angeordnet werden. Derartig ansteuerbare Schaltungen sind im Stand der Technik bekannt. So sind beispielsweise elektromagnetisch ansteuerbare und induktiv gekoppelte Schaltungen aus den EP-A-103730, EP-A-0 101 125, EP-A-0 242 906, EP-A-0 257 688 bekannt. Diese bekannte Schaltungen sind praktisch wartungsfrei, werden jedoch nur zusammen mit einem scheiben- oder kästchenförmigen Gehäuse geliefert, das an den zu identifizierenden Bauteilen angebracht wird. Die Anbringung eines derartigen Codeträgergehäuses an einem Transportmittel kommt jedoch nicht in Frage, da dadurch die gleichen Probleme wie beim gattungsgemäß berücksichtigten Transportmittel auftreten würden. Durch die Ausgestaltung des Bügels des Transportmittels selbst als Gehäuse für die reine Schaltung, kann diese an einer Stelle angeordnet werden, in der sie von beiden Seiten des Transportmittels ansteuerbar ist und trotzdem gegen Beschädigung, beispielsweise durch Auflaufen der Transportmittel aufeinander, sicher geschützt ist.

Durch die Ausgestaltung nach Anspruch 2 wird die Unterbringung des Codeträgers und die Herstellung des Bügels wesentlich vereinfacht.

Die Ausgestaltung nach Anspruch 3 sichert eine hermetische, staub- und klimadichte Abschirmung der Schaltung.

Die Verwendung der Schaltung nach Anspruch 4 erfordert einen geringen apparativen Aufwand. Außerdem ist eine solche Schaltung klein genug für die erfindungsgemäße Unterbringung im Transportmittel.

Durch die Ausgestaltung nach Anspruch 5 wird die Ablesung vereinfacht.

Ein Ausführungsbeispiel der Erfindung wird nachfolgend anhand der Zeichnungen näher erläutert. Es zeigen:
Fig. 1 eine Seitenansicht des erfindungsgemäßen Transportmittels,
Fig. 2 eine Vorderansicht des erfindungsgemäßen Transportmittels, und
Fig. 3 den Schnitt III-III aus Fig. 1.

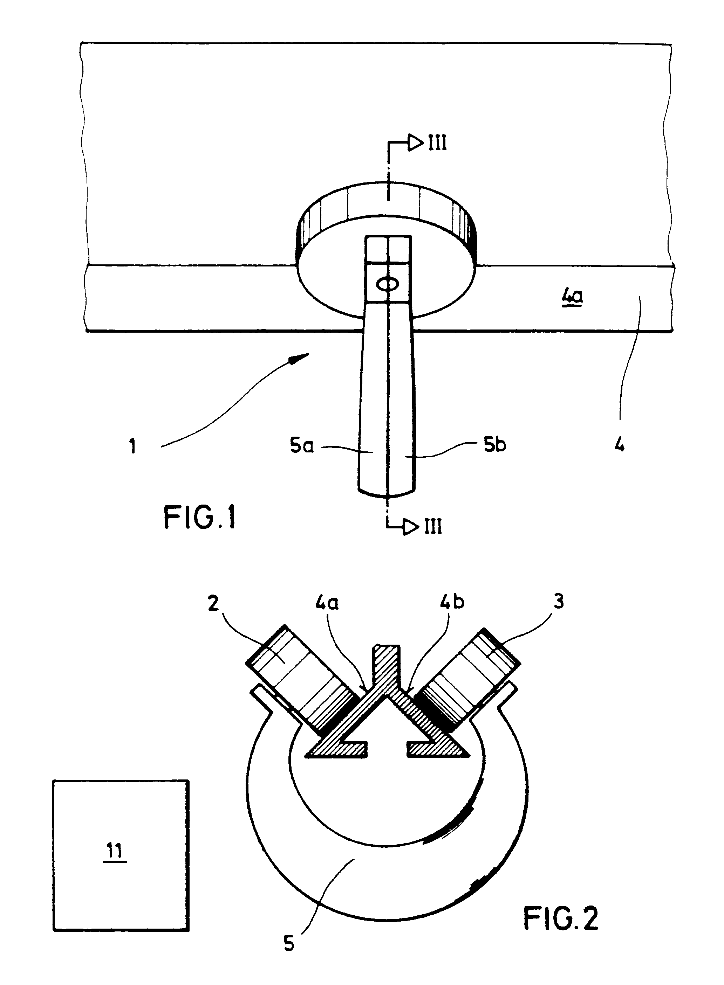

Aus den Fig. 1 und 2 ist in Seiten- und Vorderansicht ein Transportmittel 1 ersichtlich, das mit Laufrollen 2 und 3 auf einer Schiene 4 abrollen kann. Die Laufrollen 2 und 3 sind durch einen aus Kunststoff hergestellten Bügel 5 derart miteinander verbunden, daß ihre Achsen in einem rechten Winkel zueinander angeordnet sind. Die Schiene 4 weist ein etwa dachförmiges Profil mit jeweils einer Laufbahn 4a bzw. 4b für jede der Laufrollen 2 bzw. 3 auf. Der Bügel 5 ist quer zur Förderrichtung auf der Schiene 4 geteilt und besteht aus zwei Halbschalen 5a bzw. 5b. Die beiden Halbsschalen 5a, 5b sind im wesentlichen identisch ausgebildet, so daß sie in der gleichen Herstellungsform gegossen bzw. gespritzt werden können. Durch die Querteilung bleibt auch die Steifigkeit des Bügels 5 in Förderrichtung erhalten.

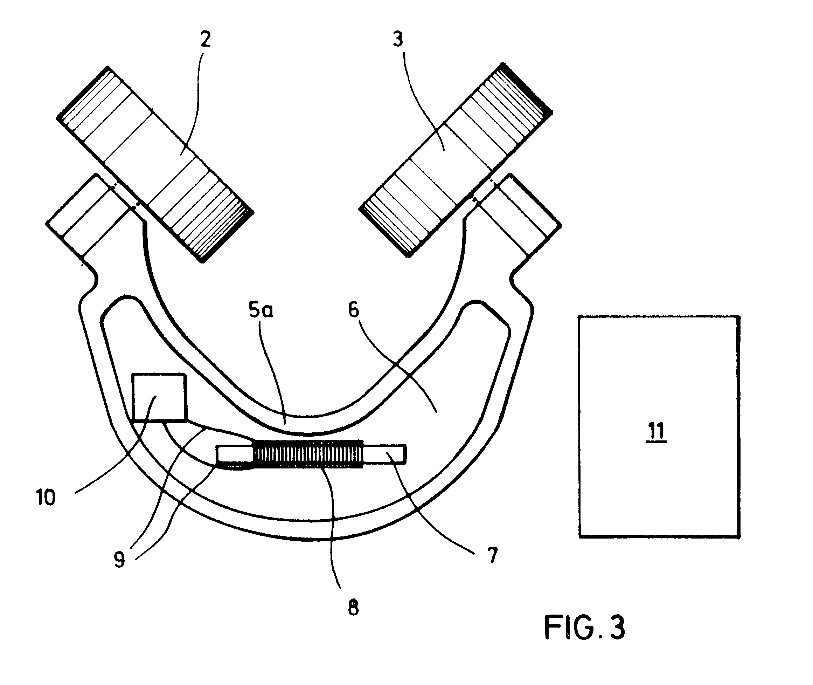

In mindestens einer der Halbschalen 5a bzw. 5b ist ein in Fig. 3 ersichtlicher Hohlraum 6 ausgespart. In diesen Hohlraum 6 ist ein Ferritkern 7 mit einer darauf angeordneten Spule 8 eingesetzt. Der Ferritkern 7 und die Spule 8 wirken als Antenne. Die Spule 8 ist mit Verbindungsdrähten 9 mit einer Hybridschaltung 10 verbunden, die die Informationen trägt. Um die Hybridschaltung 10 und den Ferritkern 7 mit der Spule 8 und den Verbindungsdrähten 9 gegen Klimaeinflüsse, Feuchtigkeit und Staub zu schützen, sind diese Bauteile in Gießharz eingebettet, das den gesamten Hohlraum 6 ausfüllt. Zur Montageerleichterung kann insbesondere die berührungsempfindliche Hybridschaltung mit einer fertigungsbedingten Schutzhülle versehen sein. Nach dem Einbetten der Schaltung werden beide Halbschalen 5a bzw. 5b zum Bügel 5 entweder lösbar, z.B. durch Schrauben oder Verrasten, oder unlösbar, z.B. durch Verkleben, verbunden. Auf diese Weise bildet der Bügel 5 ein vollständig dichtes Gehäuse für den Codeträger.

Die Antenne, d.h. der Ferritkern 7 und die Spule 8, erstreckt sich im wesentlichen senkrecht zur Förderrichtung und liegt im wesentlichen waagerecht, wenn die Laufrollen 2 bzw. 3 auf der Schiene 4 abrollen. Ein Lesegerät 11 ist an geeigneter Stelle rechts oder links neben der Schiene 4, etwa in Höhe des Ferritkernes 7 angeordnet.

Durchläuft ein Transportmittel 1 mit seinem Ferritkern 7 ein vom Lesegerät 11 erzeugtes Feld, so wird durch Induktivkopplung (elektromagnetische Übertragung) im Lesegerät 11 ein zur Anzeige kommendes, den in der Hybridschaltung 10 des durchlaufenden Transportmittels 1 gespeicherten Informationen entsprechendes Signal erzeugt, das eine Identifikation erlaubt, ohne daß das Transportmittel 1 angehalten werden muß. Darüber hinaus bietet dieses Identifikationssystem aus Schaltung und Lesegerät die Möglichkeit zum Schreiben, d.h. die in der Hybridschaltung 10 gespeicherten Informationen können nicht nur abgelesen, sondern auch neu geschrieben bzw. verändert werden.

In Abwandlung des beschriebenen und gezeichneten Ausführungsbeispieles kann beispielsweise statt des Bügels auch eine Quertraverse, d.h. eine in Förderrichtung liegende Verbindung zwischen zwei mit Laufrollen versehenen Bügeln, als Gehäuse für den Codeträger ausgebildet sein. Wenn die aus Ferritkern und Spule bestehende Antenne senkrecht zur Förderrichtung und vertikal angeordnet ist, können Lesegeräte verwendet werden, die oberhalb bzw. unterhalb des Transportmittels angeordnet werden. Auch jede andere Ausrichtung der Antenne zwischen der waagerechten und der vertikalen Stellung ist möglich. Bei Bedarf kann auch mehr als eine Antenne, gegebenenfalls in unterschiedlichen Ausrichtungen, vorgesehen werden. Statt der beschriebenen elektromagnetisch ansteuerbaren und induktiv gekoppelten Schaltung kann beispielsweise auch eine akustisch ansteuerbare Schaltung (Mikrofonschaltung) verwendet werden. Wenn ein erhöhter Aufwand in Kauf genommen wird, so kann zumindest die nicht mit der Schaltung versehene Bügelhälfte aus Vollmaterial bestehen. Schließlich kann zum Einbetten der Schaltung jeder zum Eingießen geeignete Kunststoff verwendet werden.

## Patentansprüche

1. Transportmittel (1), insbesondere für ein Hängefördersystem, mit einem mit Laufrollen (2, 3) versehenen Bügel (5) und einem berührungslos lesbaren, am Transportmittel (1) angeordneten Code-Träger, **dadurch gekennzeichnet**, daß der Bügel (5) als Gehäuse (5a, 5b) zur Unterbringung des eine berührungslos ansteuerbare, elektronische Schaltung (7, 8, 9, 10) enthaltenden Code-Trägers ausgebildet ist.

2. Transportmittel nach Anspruch 1, **dadurch gekennzeichnet**, daß der Bügel (5) zwei als Gehäuse ausgebildete Schalen (5a, 5b) enthält.

3. Transportmittel nach Anspruch 1 oder 2, **dadurch gekennzeichnet**, daß der Codeträger (7 bis 10) in eine Füllmasse, insbesondere Gießharz, eingebettet ist.

4. Transportmittel nach einem der Ansprüche 1 bis 3, **gekennzeichnet durch** die Verwendung einer elektromagnetisch bzw. induktiv ansteuerbaren Schaltung (7, 8, 10).

5. Transportmittel nach Anspruch 4, **dadurch gekennzeichnet**, daß bei Verwendung einer Hybridschaltung (10) und einer als Antenne wirkenden Spule (8) die Spule (8) im wesentlichen senkrecht zur förderrichtung angeordnet ist.

## Claims

1. Transport means (1), in particular for a suspended conveyor system, with a yoke (5) provided with rollers (2, 3) and a contactlessly readable code carrier arranged on the transport means (1), characterized in that the yoke (5) is constructed as a casing (5a, 5b) for the accommodation of the code carrier containing a contactlessly selectable electronic circuit (7, 8, 9, 10).

2. Transport means according to Claim 1, characterized in that the yoke (5) has two shells (5a, 5b) formed as a casing.

3. Transport means according to Claim 1 or 2, characterized in that the code carrier (7 to 10) is embedded in a filling compound, in particular casting resin.

4. Transport means according to one of Claims 1 to 3, characterized by the use of an electromagnetically or inductively selectable circuit (7, 8, 10).

5. Transport means according to Claim 4, characterized in that a hybrid circuit (10) and a coil (8) operating as an antenna are used and the coil (8) is arranged essentially perpendicularly to the conveying direction.

## Revendications

1. Moyen de transport (1), en particulier pour un système de transport suspendu, avec un étrier (5) muni de galets de roulement (2, 3) et un porte-code monté sur le moyen de transport (1) et pouvant être lu sans contact, caractérisé en ce que l'étrier (5) est réalisé en tant qu'enveloppe (5a, 5b) destinée à loger le porte-code contenant un circuit électronique (7, 8, 9, 10) pouvant être commandé sans contact.

2. Moyen de transport selon la revendication 1, caractérisé en ce que l'étrier (5) contient deux demi-coquilles (5a, 5b) réalisées sous la forme d'une enveloppe.

3. Moyen de transport selon la revendication 1 ou 2, caractérisé en ce que le porte-code (7 à 10) est noyé dans une matière de remplissage, en particulier de la résine coulée.

4. Moyen de transport selon l'une quelconque des revendications précédentes, caractérisé par l'utilisation d'un circuit (7, 8, 10) pouvant être commandé par voie électromagnétique et/ou par induction.

5. Moyen de transport selon la revendication 4, caractérisé en ce qu'en cas d'utilisation d'un circuit hybride (10) et d'une bobine (8) fonctionnant en tant qu'antenne la hobine (8) est montée sensiblement perpendiculairement à la direction de transport.
